# EUROPEAN PATENT APPLICATION

(11) **EP 2 709 370 A1**
(43) Date of publication of application: **19.03.2014**
(21) Application number: 12781668.4
(22) Date of filing: 13.04.2012
(51) Int. Cl.: H04N 21/258

(54) **METHOD, SYSTEM AND DEVICE FOR OBTAINING COMMENT INFORMATION WHEN TERMINAL USERS ARE WATCHING PROGRAMS**

(30) Priority: 10.05.2011 CN 201110119719
(71) Applicant: Huawei Device Co., Ltd., Longgang District Shenzhen Guangdong 518129 (CN)
(72) Inventor: GAO, Wenmei, Shenzhen Guangdong 518129 (CN); WANG, Lei, Shenzhen Guangdong 518129 (CN); FAN, Shunan, Shenzhen Guangdong 518129 (CN); ZHANG, Huiping, Shenzhen Guangdong 518129 (CN)
(74) Representative: Isarpatent
(86) International application number: PCT/CN2012/073980
(87) International publication number: WO 2012/152168

(57) **Abstract**

The present invention discloses a method, a system, and an apparatus for acquiring comment information when watching a program, which belong to the technical field of interactive television. The method includes: acquiring, by a comments functional entity, comment content sent by the end user on an IPTV program and related information corresponding to the comment content; send the related information corresponding to the comment content to a metadata control functional entity, so as to enable an end user who demands and watches the IPTV program to select and play the comment content corresponding to the IPTV program. In the embodiments of the present invention, in the process of watching a program, a user can synchronously record audio or video content as comment information on the program, and upload the comment content to a network side, so that later other friends when watching the program, thereby solving the problem of uploading comment information in an IPTV system in the prior art and introducing a new service form in an IPTV system.

## Description

This application claims priority to Chinese Patent Application No. 201110119719.3, filed with the Chinese Patent Office on May 10, 2011 and entitled "METHOD, SYSTEM, AND APPARATUS FOR ACQUIRING COMMENT INFORMATION WHEN WATCHING A PROGRAM", which is incorporated herein by reference in its entirety.

### TECHNICAL FIELD

The present invention relates to the field of interactive television, and in particular, to a method, a system, and an apparatus for acquiring comment information in the process of watching a program.

### BACKGROUND

IPTV (Internet Protocol Television, interactive network television) is a manageable multimedia service that transfers television, video, text, image, data, and the like over an IP network and provides QoS (Quality of Service, quality of service)/QoE (Quality of Experience, quality of experience), security, interactivity, and reliability. The IPTV technology integrates several technologies such as Internet, multimedia, telecommunications and provides a user with a plurality of interactive multimedia services including digital television programs through the IP protocol by using a broadband network as the infrastructure and using a home TV set, a personal computer, a mobile phone, and the like as primary display terminals. IPTV is mainly characterized as changing the conventional unidirectional broadcast media transfer manner, which supports on-demand reception for a user and achieves real-time interaction between a user and a media content provider, so as to better meet a user's individual demands.

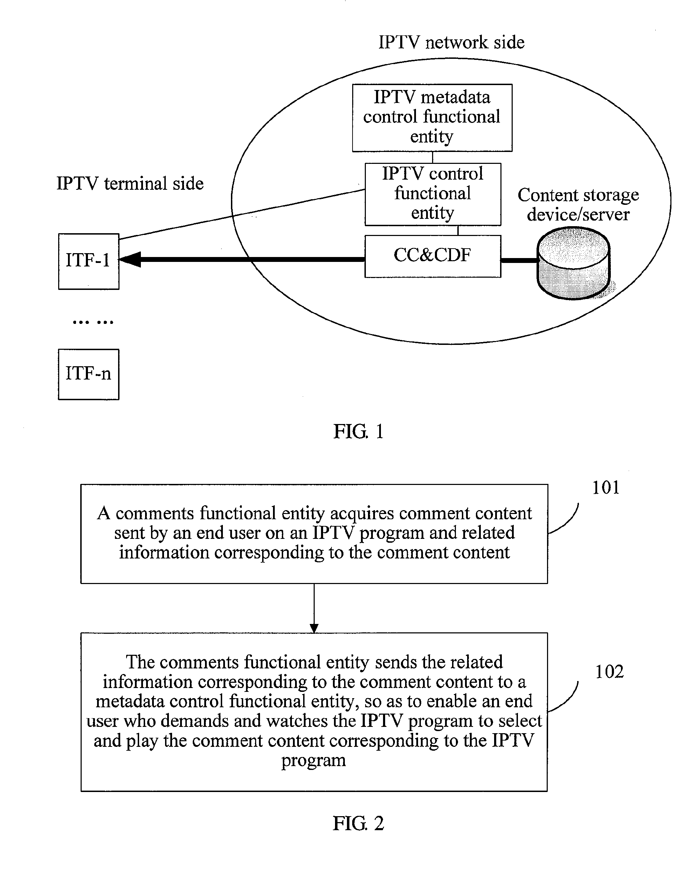

The IPTV architecture in the prior art shown in FIG. 1 includes: an ITF (IPTV Terminal Function, IPTV terminal function), an IPTV Metadata Control (IPTV metadata control functional entity), an IPTV Control (IPTV control functional entity), a Content Storage (content storage device/server), and a CC&CDF (Cluster Controller&Content Delivery Function, cluster controller&content delivery function). The ITF may include IPTV terminals such as a TV, a set-top box, a Mobile Phone. The IPTV Metadata Control stores metadata related to program contents (such as service description, an EPG-Electronic Program Guide-electronic program guide, related information about specific programs, and a personalized content guide). The IPTV Control is a major control point for the IPTV system and configured to control various IPTV services and generate charging information. The Content Storage stores practical IPTV program sources and IPTV advertisement sources (these sources may be contents of a multimedia type such as audio, video, text, and image). The CC in the CC&CDF mainly manages the playing of a group of CDFs, the CDF mainly processes, distributes, and plays media under the control of the CC, and a combination of the functional entities CC and CDF is equivalent to a CDN network. On the basis of the IPTV network architecture, a user may browse a CoD (Content on Demand, a content on demand service) content list by using a TV and choose to purchase what the user wants to watch, which can later be played for the user whenever necessary (either watch it on-line or download it locally to watch).

In the existing IPTV technology, only an RTSP (Real Time Streaming Protocol, real time streaming protocol) protocol interface exists between an ITF and a CC&CDF on a network side. A media channel established for an RTSP session is unidirectional and only allows transmission from the CC&CDF to the ITF. Although a user can select and watch contents in real time, a media player can only perform services of downlink data according to the selection of the terminal. As a result, a user feels somewhat lack of participation.

### SUMMARY

To solve the problem that comment information cannot be uploaded in an IPTV system, embodiments of the present invention provide a method, a system, and an apparatus for acquiring comment information in the process of watching a program. The technical solutions are as follows: According to an aspect, a method for acquiring comment information in the process of watching a program online is provided, in which an end user watches an IPTV program on line, and the method includes:
acquiring, by a comments functional entity, comment content sent by the end user on the IPTV program and related information corresponding to the comment content; where the related information corresponding to the comment content includes: a start position and
an end position of the comment content in the IPTV program, a duration of the comment content and/or one unique identifier corresponding to the comment content; and
sending the related information corresponding to the comment content to a metadata control functional entity, so as to enable an end user who demands and watches the IPTV
program to select and play the comment content corresponding to the IPTV program.

According to an aspect, an IPTV system is provided, in which an end user watches an IPTV program online, and the system includes: a comments functional entity and a metadata control functional entity:
the comments functional entity is configured to acquire comment content sent by the end user on the IPTV program and related information corresponding to the comment content; where the related information corresponding to the comment content includes: a start position and an end position of the comment content in the IPTV program, a duration of the comment content and/or one unique identifier corresponding to the comment content; and send the related information corresponding to the comment content to the metadata control functional entity; and
the metadata control functional entity is configured to receive the related information corresponding to the comment content sent by the comments functional entity, so as to enable an end user who demands and watches the IPTV program to select and play the comment content corresponding to the IPTV program.

According to another aspect, an apparatus for acquiring comment information in the process of watching a program online is further provided, in which an end user watches an IPTV program online, and the apparatus includes:
an acquisition module, configured to acquire comment content sent by the end user on the IPTV program and related information corresponding to the comment content; where the related information corresponding to the comment content includes: a start position and an end position of the comment content in the IPTV program, a duration of the comment content and/or one unique identifier corresponding to the comment content; and
a sending module, configured to send the related information corresponding to the comment content to a metadata control functional entity, so as to enable an end user who demands and watches the IPTV program to select and play the comment content corresponding to the IPTV program.

In the technical solutions provided in the embodiments of the present invention, in the process of watching a program, a user can synchronously record audio or video content as comment content on the program and upload the comment content to a network side, so that later other friends can synchronously watch/listen to the corresponding comment content in the process of watching the program, thereby solving the problem of uploading comment information in a conventional IPTV system and introducing a new service form in an IPTV system.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of the architecture of an IPTV system in the prior art;
FIG. 2 is a flow chart of a method for acquiring comment information in the process of watching a program provided in Embodiment 1 of the present invention;
FIG. 3 is a schematic diagram of the architecture of an IPTV system provided in Embodiment 2 of the present invention;
FIG. 4 is a message flow chart for acquiring comment information in the process of watching a program provided in Embodiment 2 of the present invention;
FIG. 5 is a message flow chart for acquiring comment information in the process of watching a program provided in Embodiment 3 of the present invention;
FIG. 6 is a message flow chart for acquiring comment information in the process of watching a program provided in Embodiment 3 of the present invention;
FIG. 7 is a flow chart of a method for acquiring comment information in the process of watching a program provided in Embodiment 4 of the present invention;
FIG. 8 is a message flow chart for acquiring comment information in the process of watching a program provided in Embodiment 4 of the present invention;
FIG. 9 is a message flow chart for acquiring comment information in the process of watching a program provided in Embodiment 4 of the present invention;
FIG. 10 is a schematic diagram of a system for acquiring comment information in the process of watching a program provided in Embodiment 5 of the present invention;
FIG. 11 is a schematic diagram of another system for acquiring comment information in the process of watching a program online provided in Embodiment 5 of the present invention;
FIG. 12 is a schematic diagram of an apparatus for acquiring comment information in the process of watching a program online provided in Embodiment 5 of the present invention; and
FIG. 13 is a schematic diagram of another apparatus for acquiring comment information in the process of watching a program online provided in Embodiment 5 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

Referring to FIG. 2, an embodiment of the present invention provides a method for acquiring comment information in the process of watching a program, in which a terminal watches an IPTV program online, and the method includes:
Step 101. A comments functional entity acquires comment content sent by an end user on an IPTV program and related information corresponding to the comment content; where the related information corresponding to the comment content includes: a start position and an end position of the comment content in the IPTV program, a duration of the comment content and/or one unique identifier corresponding to the comment content;
Step 102. The comments functional entity sends the related information corresponding to the comment content to a metadata control functional entity, so as to enable an end user who demands and watches the IPTV program to select and play the comment content corresponding to the IPTV program.

Acquiring, by a comments functional entity, comment content sent by an end user on an IPTV program and related information corresponding to the comment content includes:
receiving, by the comments functional entity, a recording start message sent by the end user, where the message carries a current playing position of the IPTV program upon the recording start message, and using the current playing position of the IPTV program as the start position;
receiving and saving an audio/video media stream sent by the end user through a media channel, where the audio/video media stream is the comment content published by the end user on the IPTV program;
generating the corresponding unique identifier for the comment content and a duration of the comment content; and
receiving a recording stop message sent by the end user, where the message carries a current playing position of the IPTV program upon the recording stop message, and
using the current playing position of the IPTV program as the end position.

Furthermore, in this embodiment, before the receiving a recording start message sent by the end user, the method further includes:
receiving a request to establish a media channel initiated by the end user, and
establishing the media channel with a terminal.

Acquiring, by a comments functional entity, comment content sent by the end user on the IPTV program and related information corresponding to the comment content includes:
receiving a comment message sent by the end user, where the message carries the comment content of the end user on the IPTV program, the start position and the end position of the comment content in the IPTV program, and the duration of the comment content; and
saving the received comment content, and generating the unique identifier for the comment content.

Furthermore, in this embodiment, before a comments functional entity acquires comment content sent by the end user on the IPTV program and related information corresponding to the comment content, the method further includes:
an IPTV control functional entity sends, to the metadata control functional entity, a request message for querying the related information about the IPTV program;
receiving a response message returned by the metadata control functional entity, where the response messages includes: an identifier indicates allowing recording the comment content, and either of a uniform resource identifier of the comments functional entity and a public service identity of a content comment; and
forwarding the response message to the terminal, so as to enable the terminal to obtain the related information about the IPTV program.

Furthermore, in this embodiment, after the sending the related information corresponding to the comment content to a metadata control functional entity, so as to enable a terminal that demands and watches the IPTV program to select and play the comment content corresponding to the IPTV program, the method further includes:
sending, by the terminal, a request message to the metadata control functional entity,
where the request message carries an identifier of the terminal, an identifier of the IPTV
program, and a list of users that have permission to view the comment content.

Furthermore, the method in this implementation further includes:
receiving, by the IPTV control functional entity, a request to watch the IPTV program sent by a second end user;
acquiring comment list information of all users that the second end user has permission to view, where the comment list information includes: related information corresponding to the comment content that the second end user has permission to view; and
sending, to a second terminal, the comment list information of all users that the second end user has permission to view.

The acquiring comment list information of all users that the second end user has permission to view includes:
sending a query request message to the metadata control functional entity, so as to enable the metadata control functional entity to query permission of the second end user to view comment content recorded by a user; and
receiving a response message returned by the metadata control functional entity, where the response message carries the comment list information of all users that the second end user has permission to view.

The sending, to a second terminal, the comment list information of all users that the second end user has permission to view includes:
inserting the comment list information of all users that the second end user has permission to view in a response message returned by a content playing functional entity
to the second terminal, and forwarding the response message to the second terminal.

Optionally, when the comment content is an audio/video media stream, after the sending, to a second terminal, the comment list information of all users that the second end user has permission to view, the method further includes:
establishing, by the second terminal, a real-time streaming session with the content playing functional entity;
initiating, to the content playing functional entity, a request message of playing the comment content; and
receiving the comment content played by the content playing functional entity to the second terminal.

Optionally, when the comment content is text information, after the sending, to a second terminal, the comment list information of all users that the second end user has permission to view, the method further includes:
sending, by the second terminal, a comment content download request message to a content comments functional entity, where the message carries a download address of the comment content;
receiving a response message returned by the content comments functional entity according to the download address of the comment content, where the response message carries all comment content requested by the second terminal; and
triggering, by the second terminal, to play a part or all of all the comment content according to time points of the comment content in the IPTV program.

In this embodiment and other embodiments herein, various entities such as a comments functional entity, an IPTV control functional entity, and a metadata control functional entity only indicate a logical relationship, which can specifically be implemented by software or also by hardware and not specifically limited in this embodiment.

In the technical solutions provided in the embodiments of the present invention, in the process of watching a program, a user can synchronously record audio or video content as comment content on the program, so that later other friends can synchronously watch/listen to the corresponding comment content when watching the program, thereby solving the problem of uploading comment information in a conventional IPTV system and introducing a new service form in an IPTV system.

### Embodiment 2

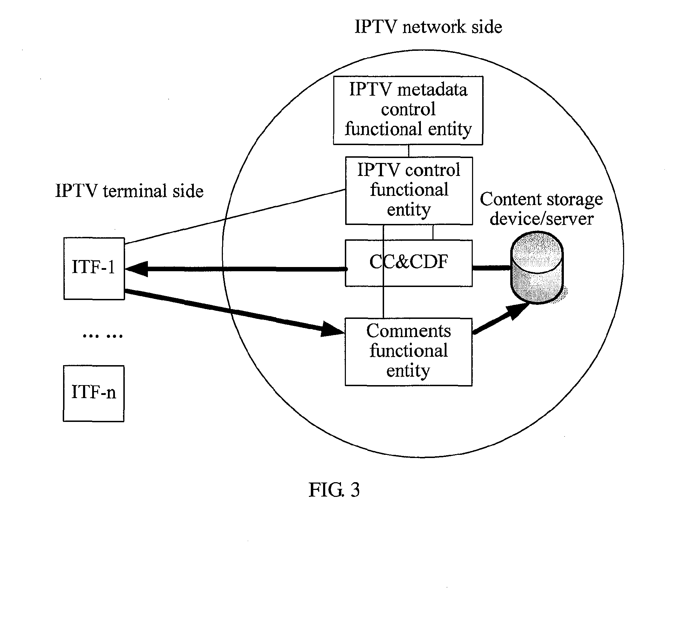

An embodiment of the present invention provides a method for acquiring comment information when watching a program. In the embodiment of the present invention, to acquire comment information when watching a program, real-time upload of synchronous audio and video comments needs to be implemented when watching a program. For real-time upload of synchronous audio and video comment media, the key points are: real-time upload and synchronization. An optimal approach of real-time upload is to establish an uplink media channel between an ITF terminal and a network side, so as to send captured audio and video data of a user in real time to the network side for saving. However, only an RTSP protocol interface exists between an ITF and a CC&CDF on a network side in the prior art. A media channel established for an RTSP session is unidirectional, that is, only allows transmission from the CC&CDF to the ITF, and uplink transmission cannot be performed. Therefore, a SIP session needs to be established between the ITF and an entity on the network side, so as to implement the uplink of a media stream. One new entity requires to be added on the network side, which is configured to negotiate a SIP session and record a media stream in real time. Therefore, in this embodiment, a Comments Function (comments functional entity) is added. The network architecture in this embodiment is shown in FIG. 3, which includes: an ITF, an IPTV Metadata Control, an IPTV Control, a Content Storage, a CC&CDF, and a Comments Function. In this embodiment, the added functional entity Comments Function is configured to receive, record, and save the synchronous audio and video, and text comment information recorded or uploaded by the user.

In this embodiment, during real-time upload, the ITF needs to carry a time point for synchronization through an INFO message and send the INFO message to the Comments Function, so that when the program is watched on other ITFs later. The network side first sends the corresponding time point information to the ITF. Next, when the program is being played, the ITF triggers to establish a new RTSP session with the CC&CDF at the corresponding time point, so as to play the corresponding audio and video comment media stream.

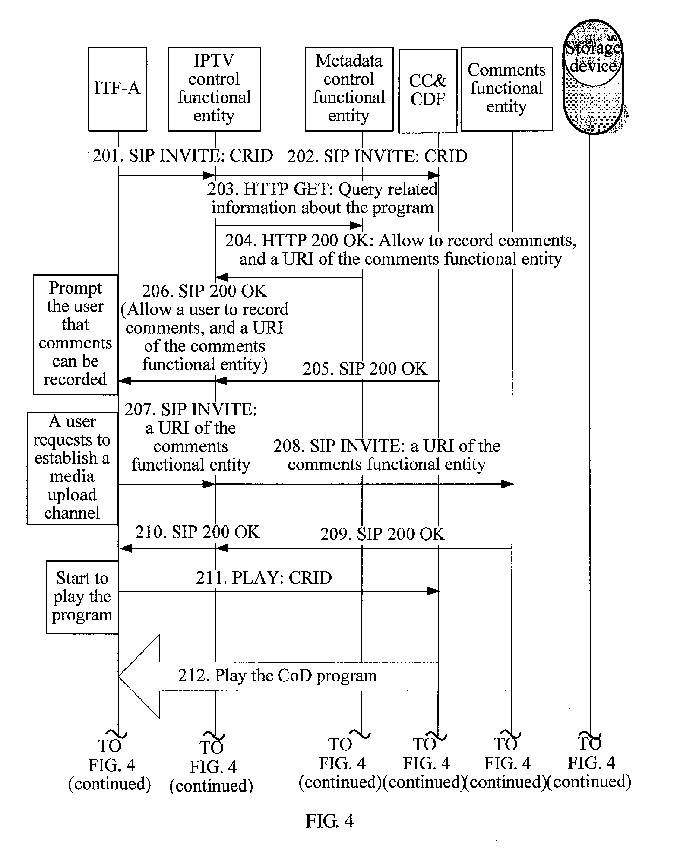

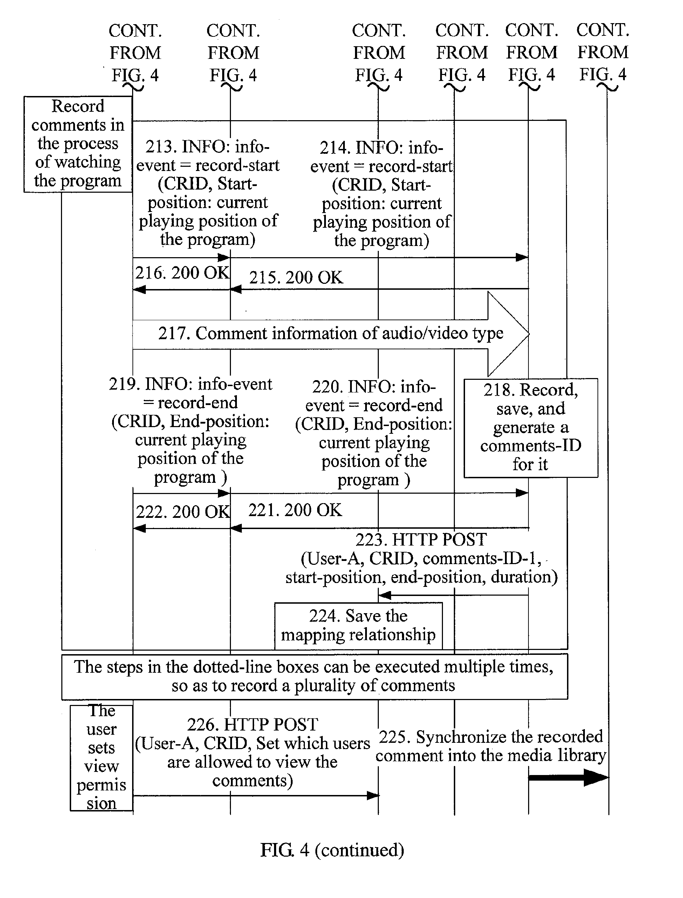

In the method for acquiring comment information when watching a program provided in this embodiment, the application scenario is: a user A selects one CoD program (CoD program) to watch, and during the watching, if the user wants to publish a comment on a segment or plot, the user can pause the program (or comment while playing) and then record an audio or video comment (by using a built-in/external microphone and camera of the TV for capturing). The network side records the comment content for other users to listen to/watch later. After completing recording, the user A can further set which friends are allowed to view the comment (or can also set the comment to be completely open). Referring to FIG. 4, the message flow of the method provided in this embodiment is as follows:
201. A user A sends a SIP INVITE message to an IPTV Control, where the message carries a CRID (Content Record ID, an identifier of a program).

In this embodiment, a user A operates on an IPTV terminal to request to play one CoD program, so that after the terminal makes a selection, the terminal initiates a session to the CC&CDF through the IPTV Control. In this embodiment, the terminal corresponding to the user A is an ITF-A.

202. The IPTV Control forwards the INVITE message to the CC&CDF.

203. The IPTV Control sends an HTTP GET message to a Metadata Control functional entity.

In this embodiment, after the terminal initiates the request to the CC&CDF, the IPTV Control sends the HTTP GET message to the Control functional entity at the same time, so as to query related information about the CoD program.

Steps 201-203 are a process in which the IPTV Control sends a request message for querying related information about the IPTV program to the Metadata Control after receiving a request to play an IPTV program sent by the terminal.

204. The Metadata Control returns an HTTP 200 OK response message to the IPTV Control, where the message carries the related information about the CoD program.

The related information includes "allow a recording comment" and a URI (Uniform Resource Identifier, uniform resource identifier) of the comment function functional entity or a PSI (Public Service Identity, public service identity) of a content comment service.

205. The CC&CDF returns a SIP 200 OK message to the IPTV Control.

In this embodiment, the message returned by the CC&CDF might reach the IPTV Control prior to the message in step 204. If the message reaches the IPTV control first, the message is temporarily stored first but not sent, and the processing of inserting and sending is performed only when the message in step 204 is received.

206. The IPTV Control inserts in the SIP 200 OK message the related information about the CoD program returned by the Metadata and then forwards the SIP 200 OK message to the ITF-A.

Upon reception, the ITF-A presents the related information on a user interface, so as to prompt a user that comments can be recorded for the program.

207. The ITF-A sends a SIP INVITE message to the IPTV Control.

In this embodiment, if the user selects to enable the function of recording comments, the ITF-A sends a SIP INVITE message to the IPTV Control, the Request-URI of the message carries the URI of the comments function (or the PSI of the comments service), and the message further carries an SDP offer, so as to request to establish a media channel with the comments function.

208. The IPTV Control forwards the INVITE message to the Comments Function.

209. The Comments Function returns a SIP 200 OK response message to the IPTV Control, where the message carries an SDP answer.

210. The IPTV Control forwards the SIP 200 OK message with the SDP answer to the ITF-A.

In this embodiment, in the process in which a user records a comment, in the message in step 206, the IPTV Control, returns to the ITF through the SIP 200 OK message, "allow a user to record a comment on the CoD program" and the URI address of the comments function. In fact, the information can also be acquired before a user initiates a CoD session. That is, a user browses CoD program information by using an ITF. At this time, the ITF acquires CoD list information from the IPTV Application. In this process, the IPTV Application can return, to the ITF, "allow a user to record a comment on the CoD program" and the URI address of the comments function. When a user requests to play the CoD later, the Request URI of the INVITE message for the establishment of an uplink media channel by a user carries the comments function.

In this embodiment, the comment information includes: comment content published by a terminal, a corresponding start position and end position of the published comment content in the playing program, a duration of the comment content, and a unique identifier corresponding to the comment information.

211. The ITF-A sends an RTSP PLAY request to the CC&CDF.

The user selects to start to play a CoD program after requesting to enable the function of recording comments, and the ITF-A sends an RTSP PLAY request to the CC&CDF.

212. The CC&CDF starts to deliver streaming media content to the ITF-A.

213. After receiving the command for the user to start recording, the ITF-A sends an INFO message to the IPTV Control.

In this embodiment, after starting to receive the streaming media content, the ITF-A prompts a user that "record comments at any time now". If a user intends to record comments at a moment, the user presses a function key/button, and the ITF-A sends an INFO message to the IPTV Control, where the message carries info-event=record-start, a CRID, start-position=a playing position/current playing time point of the current CoD program (practically time information, that is, how many seconds the current program has been played, and the information is used as the start position of a program range corresponding to the comments).

214. The IPTV Control forwards the INFO message to the Comments Function.

215. The Comments Function returns a 200 OK (INFO) response message.

216. The IPTV Control forwards the 200 OK (INFO) message to the ITF-A.

In this embodiment, after receiving the response, the ITF-A prompts the user that "recording can start now".

217. The Comments Function receives the video media stream recorded by the user.

The user records an audio or video media stream (for example, by using a media capture apparatus such as a microphone, and a camera), and the media stream directly reaches the Comments Function.

218. The Comments Function records and saves the received media stream, and then generates one unique comments-ID for the piece of audio/video comments media, and generates a duration of the comment content.

In this embodiment, the form of the ID can be in a URI form, for example: "comments function-URI + a unique sequence number", which is not specifically limited in this embodiment. 219. After receiving a command for the user to stop recording, the ITF-A sends an INFO message to the IPTV Control.

After having recorded one piece, the user presses the stop key, the ITF-A sends an INFO message to the IPTV Control, where the message carries info-event=record-end, a CRID, end-position=a playing position/current playing time point of a current CoD program (practically time information, that is, how many seconds the current program has been played, and the information is used as the end position of a program range corresponding to the comments).

220. The IPTV Control forwards the INFO message to the Comments Function.

221. The Comments Function returns a 200 OK (INFO) message to the IPTV Control.

222. The IPTV Control forwards the 200 OK (INFO) to the ITF-A.

223. The Comments Function sends an HTTP POST message to the Metadata Control and sends the related information about the just recorded comment content to the Metadata Control for saving. The related information includes: an identifier of a user A, a CRID, a comments-ID, a start-position, an end-position, and a duration (that is, the duration of the comment).

224. The Metadata Control saves the related information sent by the Comments Function, so as to enable a terminal that demands and watches the IPTV program to select and play the comment content corresponding to the IPTV program.

225. The Comments Function synchronizes the recorded comment content into the Storage (that is, the storage device for storing the IPTV content source).

The step can also be performed after the user has finished watching the CoD program (that is, all comments have been recorded), the comments function synchronizes all the comments media into the storage.

226. After the user has recorded the comment content, the ITF-A sends an HTTP POST to the Metadata Control, where the message carries the identifier of the user A, the CRID, and a list of users who have permission to view comments.

In this embodiment, after having recorded all the comments, the user A can set view permission on the comments (that is, which users are allowed to view the comments). The user list for the comments may be the identifiers of one or more users, and may also be an identifier of one user group.

When a user B (B is a friend of A) requests to watch the CoD program later, a prompt message appears on the TV screen: a user A has generated synchronous comment information during watching and you may choose to listen to/watch the information. The user B then can synchronously see/hear the comment information of the user A at the same time while watching the program.

The beneficial effect of the technical solution provided in the embodiment of the present invention is that it is achieved that in an IPTV system, in the process of watching a program, a user can synchronously record audio or video content as comment information on the program, and upload the comment content to a network side, so that later other friends can synchronously watch/listen to the corresponding comment content in the process of watching the program. A new service form is introduced in an IPTV system, and the service form is suitable for various hobby groups. Audio and video type comment information can be uploaded and recorded in real time, thereby avoiding the occupation of the storage space of an ITF terminal and increasing the upload efficiency.

### Embodiment 3

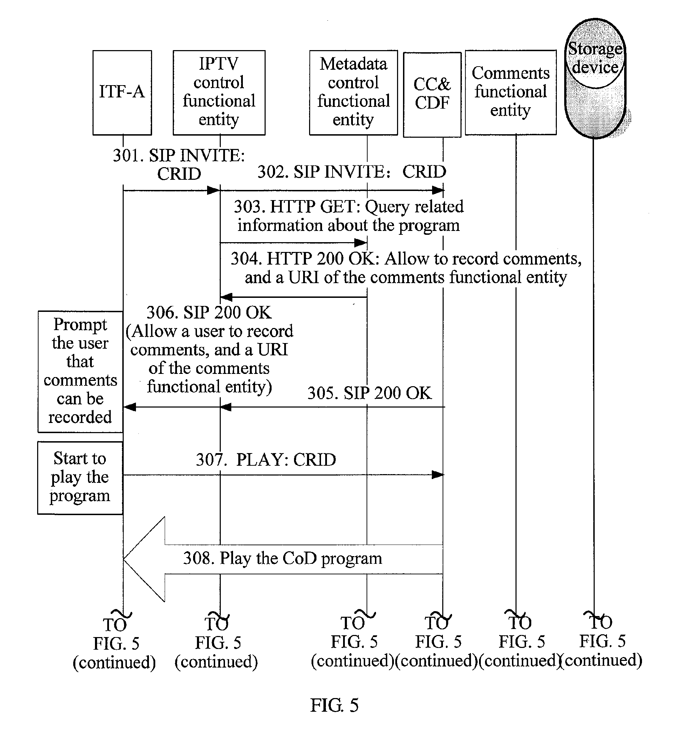

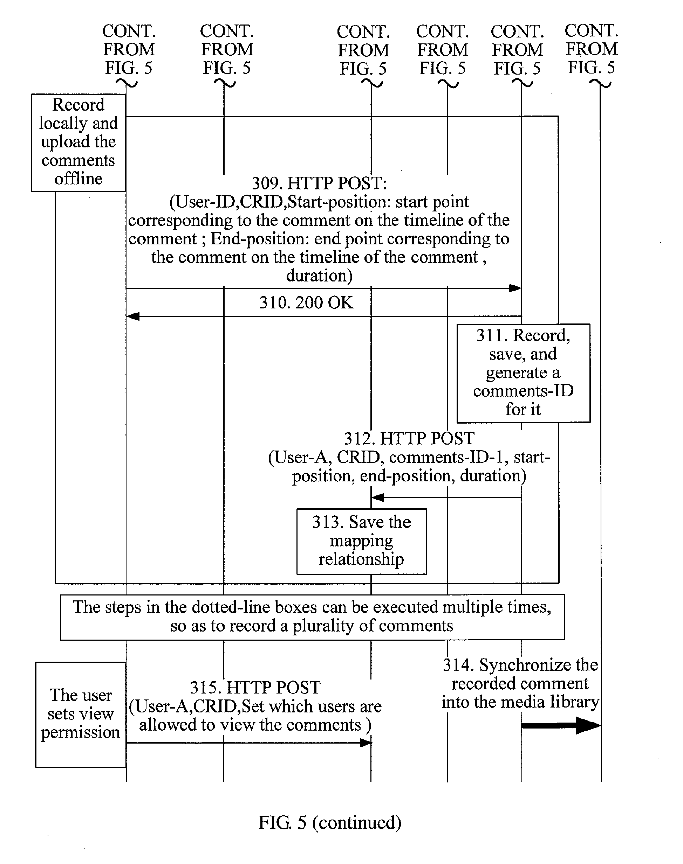

An embodiment of the present invention provides a method for acquiring comment information in the process of watching a program. The application scenario in this embodiment is basically the same as the application scenario in Embodiment 2, except for that a user can locally record audio and video comment information when watching a program or after watching a program and then upload the information to a server side. Referring to FIG. 5, the specific message flow is as follows: 301. A user A sends a SIP INVITE message to an IPTV Control, where the message carries a CRID (Content Record ID, an identifier of a program).

302. The IPTV Control forwards the INVITE message to a CC&CDF.

303. The IPTV Control sends an HTTP GET message to a Metadata Control functional entity.

304. The Metadata Control returns an HTTP 200 OK response message to the IPTV Control, where the message carries the related information about a CoD program.

305. The CC&CDF returns a SIP 200 OK message to the IPTV Control.

306. The IPTV Control inserts in the SIP 200 OK message the related information about the CoD program returned by the Metadata and then forwards the SIP 200 OK message to an ITF-A.

307. The ITF-A sends a SIP INVITE message to the IPTV Control.

308. The IPTV Control forwards the INVITE message to a Comments Function.

Steps 301-308 are the same as steps 201-208 of the upload flow in Embodiment 2, which are no longer elaborated here in this embodiment. The difference lies in that, in this embodiment, a user can locally record audio and video comment information when watching a program or after watching a program, and then upload the information to a server side.

309. The ITF-A sends an HTTP POST message to the comments function and uploads the comment content that has been recorded by the user to the Comments Function, where the message carries: an identifier of the user, a CRID, a Start-position, an end-position, and a duration.

In the process of watching a program (or after watching a program), a user can locally record audio and video comments in the ITF and temporarily save the comments in a local memory of the ITF, and then the user can select to upload a recorded comments file to the comments function.

310. The Comments function returns an HTTP 200 OK message to the ITF-A.

311. The Comments Function saves the received comments file and generates one comments-ID (in a URI form) for the comments file.

Steps 312-315 are the same as steps 223-226 of the upload flow in Embodiment 2, which are no longer elaborated here in this embodiment.

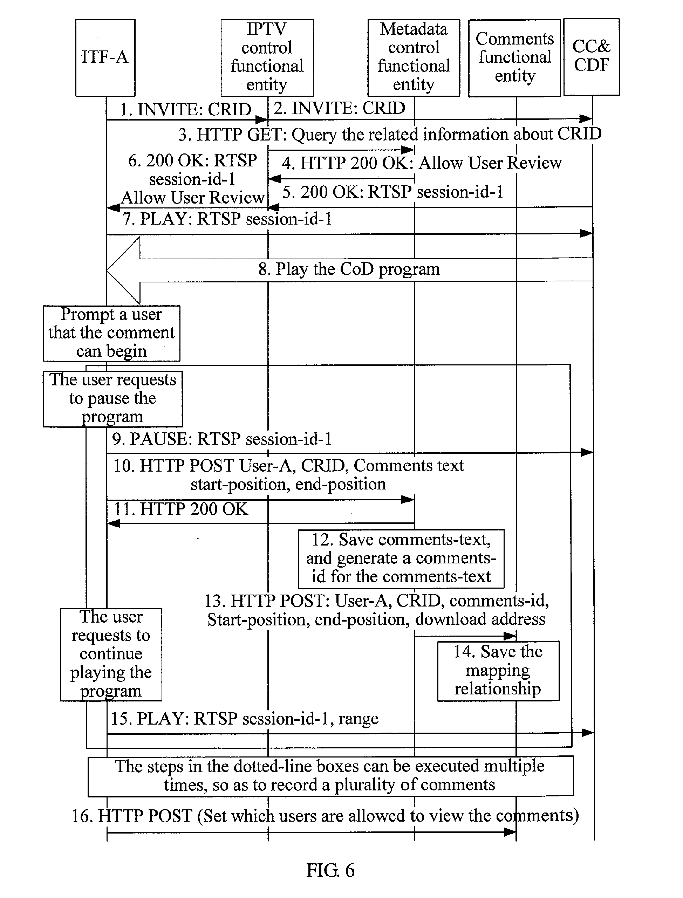

In this implementation, a user can select to record audio media stream information or can also select to record text comment information. For example, a user A selects to watch a CoD program (CoD program), during the watching, if the user A wants to publish a comment on a segment or plot, the user can pause the program, then enter a piece of text comment information (by using an external keyboard or remote control of a TV or a mobile phone for entering), save the text information at the terminal, and upload the text comment information to a network side. The network side saves the comment content for other users to view later. The user A can further set which friends are allowed to view the comment (or can also set the comment to be completely open). The specific message flow that the user uploads text comments is shown in FIG. 6:
1. The user A intends to watch a CoD program: the ITF-A sends an INVITE message to the IPTV Control, where the message carries a CRID.
2. The IPTV Control forwards the INVITE message to the CC&CDF.
3. The IPTV Control sends an HTTP GET message to the Metadata Control to query the related information about the CoD program.
4. The Metadata Control returns to the IPTV Control the related information, which includes: synchronous text comments that a user is allowed by the program to enter.
5. The CC&CDF returns a 200 OK (INVITE) message to the IPTV Control.
6. The IPTV Control inserts in the 200 OK (INVITE) message the related information returned by the Metadata Control, and then forwards the 200 OK (INVITE) message to the ITF-A.

The ITF-A extracts the related information therein and prompts the user with the related information, for example, prompt information such as "the program allows you to enter synchronous text comments". A user can select to enable a function of entering text comments during watching.
7. The user clicks play to start to play the CoD program: the ITF-A sends an RTSP PLAY request to the CC&CDF.
8. The CC&CDF delivers a CoD program media stream to the ITF-A.
9. If the user intends to enter text comments at a moment, the user can pause the program first: the ITF-A sends an RTSP PAUSE message to the CC&CDF, so that the CC&CDF pauses the playing of the program.
10. After entering the text information, the user uploads the text information into the comments function: the ITF-A sends an HTTP POST message to the comments function, where the message carries an identifier of the user, a CRID, a Comments Text, a start-position, and an end-position.
11. The Comments function returns an HTTP 200 OK message to the ITF-A.
12. The Comments function saves the comments text and generates one comments-ID for the comments text (the ID is in a non-URI form, and only needs to be a unique character string/numerical value).
13. The Comments function sends the related information about the comments to the Metadata Control for saving: sends an HTTP POST message, where the message carries an identifier of the user, a CRID, a comments-id, a start-position, an end-position, a download address of a comments text (note: one piece of comments text may correspond to one download address, or also all comments texts of the user may correspond only to one download address).
14. The Metadata Control saves the related information about the comments.
15. After finishing uploading the comment text, the user requests to continue playing the CoD program: the ITF-A sends an RTSP PLAY request to the CC&CDF.
16. After having uploaded all comments, the user may set view permission on the comments (that is, which users are allowed to view): the ITF-A sends the HTTP POST to the Metadata Control, where the message carries an identifier of the user A, a CRID, a list of users who have permission to view comments (may be identifiers of one or more users, or may also be an identifier of one user group). When a user B (B is a friend of A) requests to watch the CoD program later, a prompt appears on the TV screen: a user A has generated synchronous comment information during watching and you may choose to watch the information. The user B then can synchronously see the text comment information of the user A at the same time while watching the program.

The beneficial effect of the technical solution provided in the embodiment of the present invention is that it is achieved that in an IPTV system, in the process of watching a program, a user can synchronously record audio or video content as comment information on the program, and upload the recorded comment content to a network side, so that later other friends can synchronously watch/listen to the corresponding comment content when watching the program. A new service form is introduced in an IPTV system, and the service form is suitable for various hobby groups, thereby solving the problem in the prior art that uplink transmission cannot be performed in an IPTV system.

### Embodiment 4

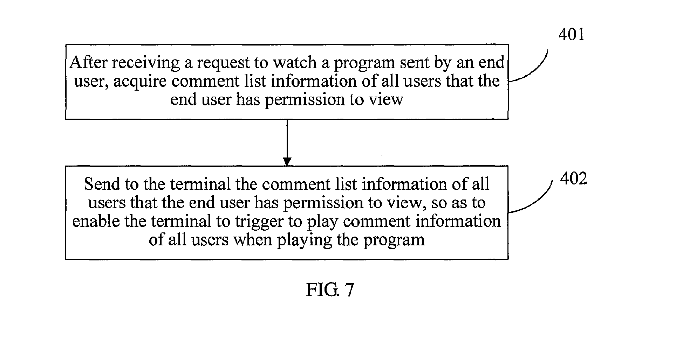

Referring to FIG. 7, an implementation of the present invention provides a method for acquiring comment information in the process of watching a program, which includes:
Step 401. After receiving a request to watch a program sent by an end user, acquire comment list information of all users that the end user has permission to view.

This embodiment, by applying the network architecture in Embodiment 2, provides a method for a user to watch comment information at the same time while watching a program after another user has uploaded the comment information for the program. A user B can select the following several manners to watch the comment information:
a. Play the program normally, and do not display any comment information during the playing.
b. Play the program normally, and synchronously play audio and video type comment information (an audio stream of the program may be selected to be turned off, or a video comment may be presented in a picture-in-picture mode).
c. Play the program normally, and prompt that comment information is available before a corresponding comment point during the playing (prompt a period of time beforehand, for example, 30 seconds or 1 minute), so that the user B can select to pause the program and play the comment.
d. Play the program normally, pause automatically at a comment point during the playing, play comment information, and the user then manually selects to continue playing the program/or automatically continue playing the program.
e. Do not play the program, and instead browse playing comment information according to a comment point sequence, in which the picture of the program automatically switches with the comment point.

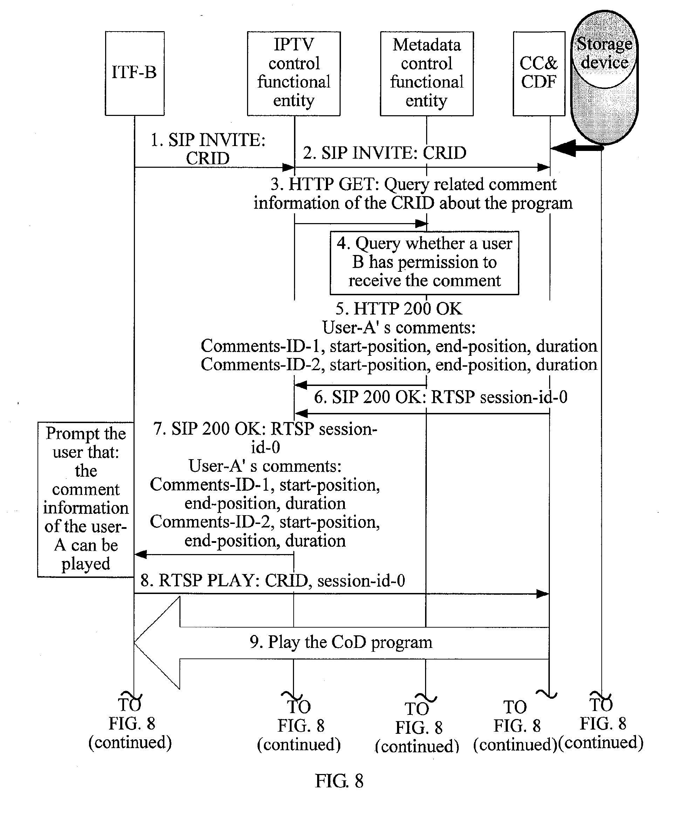

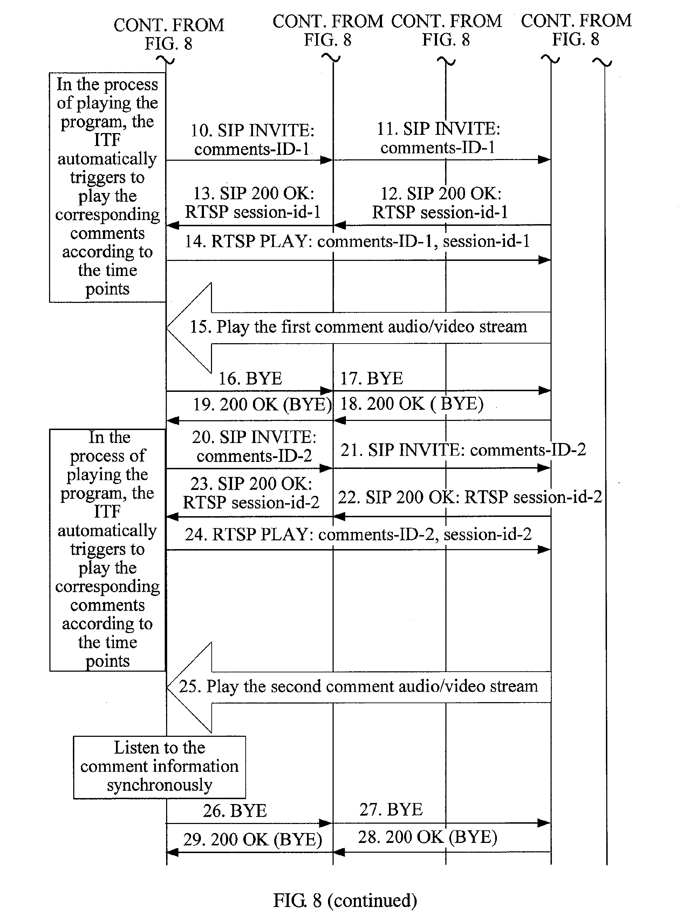

The specific message flow is shown in FIG. 8. The message flow of implementing the step includes 1-6:
1. A user B intends to watch a CoD program: an ITF-B sends a SIP INVITE message to an IPTV Control, where the message carries a CRID identifier of the CoD program.
2. The IPTV Control forwards the INVITE message to a CC&CDF.
3. The IPTV Control sends an HTTP GET message to a Metadata Control to query related information about the CoD program.
4. The Metadata Control queries which users' recorded comments the user B has permission to view.
5. The Metadata Control returns an HTTP 200 OK message to the IPTV Control, where the message carries the related information about the CoD program, including a list of comments of all users that the User-B can view.
   The comment information list includes: a corresponding start position and end position of comment content in an IPTV program, a duration of the comment content, and a unique identifier corresponding to the comment content. For example:
   Comments of a User-A:
      comments-ID-1, start-position, end-position, duration
      comments-ID-2, start-position, end-position, duration
   Comments of a User-X:
      comments-ID-3, start-position, end-position, duration
      comments-ID-4, start-position, end-position, duration
6. The CC&CDF returns a SIP 200 OK (INVITE) message to the IPTV Control.
   Step 402. Send, to a terminal, list information of comment information of all users that the end user has permission to view, so as to enable the terminal to trigger to play comment information of all users when playing the program.
   For the specific message flow of implementing this step, refer to the message flow of 7-15 in FIG. 8:
7. The IPTV Control inserts in the SIP 200 OK (INVITE) message information acquired from the Metadata Control and then forwards the SIP 200 OK (INVITE) message to the ITF-B.
   After receiving a response message, the ITF-B extracts the related information therein and prompts the user with the related information, for example "you may synchronously play/display the comments of user A and user X in the process of playing the program". If the user B selects the comments of the user A, only the comments of A are played while the program is being played later.
8. The user B clicks to start to play the CoD program: the ITF-B sends an RTSP PLAY message to the CC&CDF.
9. The CC&CDF delivers a program media stream to the ITF-B.
10. In the process of playing the program, the ITF-B automatically triggers synchronous playing of the comments according to the start time point (start-position) of the comments.
   When triggering the playing of a first comment, the ITF-B initiates a request to establish an RTSP session, that is, sends an INVITE message to the IPTV Control, where the Request-URI of the message is set to be comments-ID-1.
11. The IPTV Control forwards the INVITE message to the CC&CDF.
12. The CC&CDF returns a 200 OK message to the IPTV Control.
13. The IPTV Control forwards the 200 OK message to the ITF-B.
14. The ITF-B sends an RTSP PLAY message to the CC&CDF to request to start to play comments-1.
15. The CC&CDF plays to the ITF-B the media stream of the comments-1.
   The TTF-B plays the comments media at the same time while playing the CoD program. In the case of audio comments, the original sound of the program needs to be suppressed (or the program needs to be paused). In the case of video comments, a small window (similar to a picture-in-picture mode) is further needed for playing.
16-19. The ITF-B learns according to the duration (duration) of the comments when the comment ends, and when the comment ends, the ITF-B automatically triggers to send a BYE message to the CC&CDF, so that the CC&CDF releases the RTSP session and returns a 200 OK (BYE) response message.
20-29. Steps 20-29 are basically the same as steps 10-19. That is, when the time point of a second comment is reached, the ITF-B triggers a flow of establishing an RTSP session, the difference only lies in that comments-ID-1 is replaced by comments-ID-2. In this way, it is achieved that the user B synchronously watches/listens to the comment information recorded by the user A in advance in the process of watching the CoD program.

In the flow of synchronously playing the comments while other users watch the program later, the IPTV Control returns to the ITF, through the SIP 200 OK message in step 7, the user comment information list related to the CoD program. In fact, the list information can also be obtained when the users browse the information about the CoD program, that is, when the ITF acquires the CoD information from the IPTV Application, the IPTV Application returns to the ITF the list of all comments information that the users have permission to view. Later the ITF directly adds the comments-ID-x to the request URI of the INVITE message.

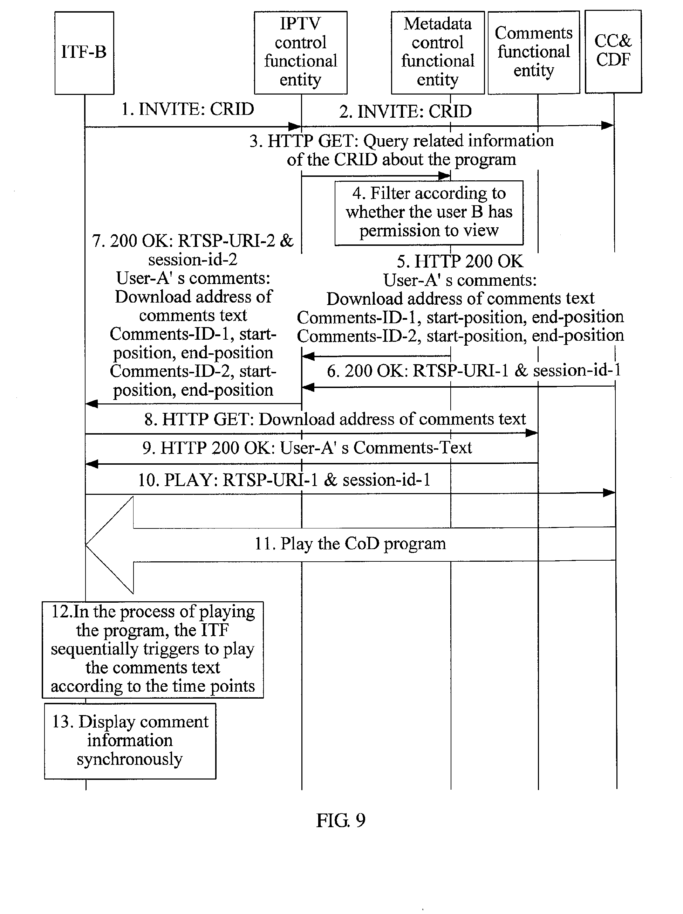

The foregoing method for acquiring comment information is a method for audio and video media streams. If the comment information is text information, refer to the specific message flow for acquiring comment information in FIG. 9:
1-4. Steps 1-4 are the same as the foregoing message flow of delivering audio and video media streams, which are no longer elaborated here.
5. The Metadata Control returns an HTTP 200 OK message to the IPTV Control, where the message carries the related information about the CoD program, including a list of comments of all users that the User-B has permission to view. For example:
   Comments of a User-A:
      download address of comments text
      comments-ID-1, start-position, end-position
      comments-ID-2, start-position, end-position
   Comments of a User-X:
      download address of comments text
      comments-ID-3, start-position, end-position
      comments-ID-4, start-position, end-position

   In this embodiment, because text comment information is of a very small size, all comments can be directly downloaded locally (downloaded according to the download address of the comments text here), and later displayed locally based on a time point.
6. The CC&CDF returns a SIP 200 OK (INVITE) message to the IPTV Control.
7. The IPTV Control inserts in the SIP 200 OK (INVITE) message information acquired from the Metadata Control and then forwards the SIP 200 OK (INVITE) message to the ITF-A.
   After receiving a response message, the ITF-B extracts the related information and prompts the user that, for example, "you may synchronously play/display the comments of user A and user X in the process of playing the program".
8. If the user B selects the comments of the user A, the ITF-B sends an HTTP GET request message to the Comments function, where the message carries the download address of the comments text.
9. The Comments function returns an HTTP 200 OK message to the ITF-B, where the message carries all comments texts on the CoD program of the user A.
10. The user clicks play to start to watch the CoD program: the ITF-B sends an RTSP PLAY request message to the CC&CDF.
11. The CC&CDF sends a program media stream to the ITF-B.
12. During the playing of the program, the ITF-B sequentially triggers the display of comments-text according to time points of all comments.
13. Therefore, the user can watch synchronous text comments in the process of watching the program.

The beneficial effect of the technical solution provided in the embodiment of the present invention is that it is achieved that in an IPTV system, in the process of watching a program, a user can synchronously record audio or video content as comment information on the program, and save the comment information on a network side, so that later other friends can synchronously watch/listen to the corresponding comment content when watching the program. A new service form is introduced in an IPTV system, and the service form is suitable for various hobby groups. Audio and video type comment information can be uploaded and recorded in real time, thereby avoiding the occupation of the storage space of an ITF terminal and increasing the upload efficiency.

### Embodiment 5

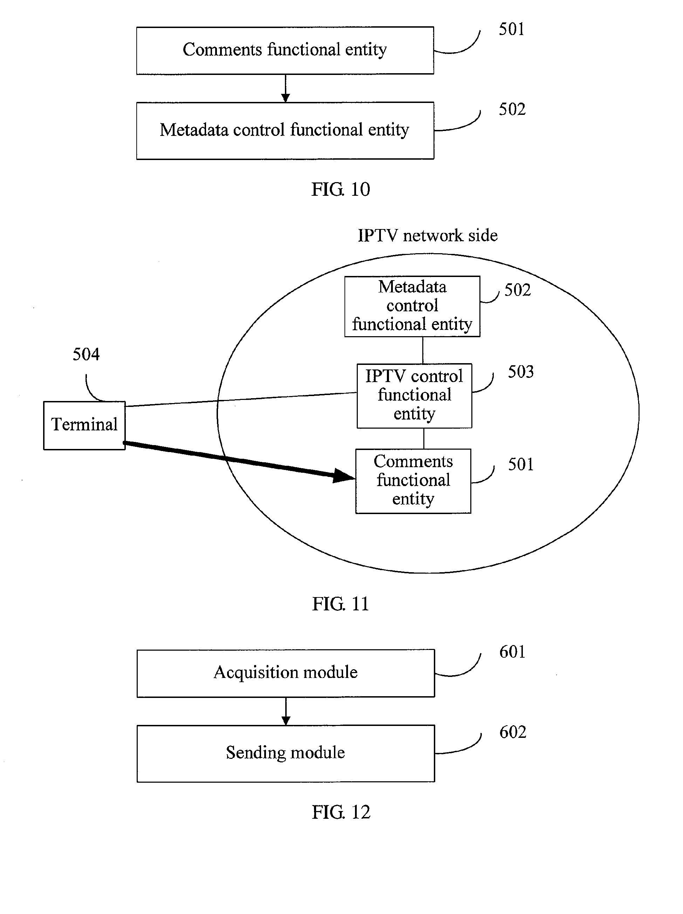

Referring to FIG. 10, this embodiment provides a system for acquiring comment information when watching a program, in which an end user watches an IPTV program online, and includes: a comments functional entity 501 and a metadata control functional entity 502.

The comments functional entity 501 is configured to acquire comment content published by the end user on the IPTV program and related information corresponding to the comment content; where the related information corresponding to the comment content includes: a start position and an end position of the comment content in the IPTV program, a duration of the comment content and/or one unique identifier corresponding to the comment content; and send the related information corresponding to the comment content to the metadata control functional entity.

The metadata control functional entity 502 is configured to receive the related information corresponding to the comment content sent by the comments functional entity, so as to enable an end user who demands and watches the IPTV program to select and play the comment content corresponding to the IPTV program.

The comments functional entity 501 includes:
A first acquisition module, configured to receive a recording start message sent by the end user, where the message carries a current playing position of the IPTV program upon the recording start message, and use the current playing position of the IPTV program as the start position; receive and save an audio/video media stream sent by the end user through a media channel, where the audio/video media stream is the comment content published by the terminal on the IPTV program;
   generate a corresponding unique identifier and a duration of the comment content for the comment content; and
   receive a recording stop message sent by the end user, where the message carries a current playing position of the IPTV program upon the recording stop message or, use the current playing position of the IPTV program as the end position.

Furthermore, in this embodiment, the first acquisition module of the comments functional entity 501 is further configured to: before the receiving a recording start message sent by the end user, receive a request to establish a media channel initiated by the end user, and establish the media channel with a terminal.

The comments functional entity 501 includes:
A second acquisition module, configured to receive a comment message sent by the end user, where the message carries the comment content published by the end user on the IPTV program, a start position and an end position of the comment content in the IPTV program, a duration of the comment content; and save the received comment content, and generate a unique identifier for the comment content.

Referring to FIG. 11, furthermore, the system in this embodiment further includes an IPTV control functional entity 503 that is configured to, before the comments functional entity 501 acquires the comment content sent by the end user on the IPTV program and the related information corresponding to the comment content, send to the metadata control functional entity a request message for querying the related information about the IPTV program; receive a response message returned by the metadata control functional entity, where the response messages includes: an identifier indicates allowing recording the comment content, and either of a uniform resource identifier of the comments functional entity and a public service identity of the content comment; and forward the response message to the terminal, so as to enable the terminal to obtain the related information about the IPTV program.

Referring to FIG. 11, furthermore, the system in this embodiment further includes a terminal 504 that is configured to, after the comments functional entity 501 sends the related information corresponding to the comment content to the metadata control functional entity, so as to enable the end user who demands and watches the IPTV program to select and play the comment content corresponding to the IPTV program, send a request message to the metadata control functional entity, where the request message carries an identifier of the terminal, an identifier of the IPTV program, and a list of users who have permission to view the comment information.

In this embodiment, the system in this embodiment further includes a second terminal 505. The IPTV control functional entity 503 is further configured to, after receiving the request to watch the IPTV program sent by a second end user, acquire comment list information of all users that the second end user has permission to view, where the comment list information includes: related information corresponding to the comment content that the second end user has permission to view; and send to the second terminal list information of comment information of all users that the second end user has permission to view.

Furthermore, in this embodiment, the IPTV control functional entity 503 includes:
a query module, configured to send a query request message to the metadata functional entity 502, so that the metadata functional entity 502 queries permission of the second end user to view comment content recorded by a user; receive a response message returned by the metadata functional entity 502, where the response message carries comment list information of all users that the second end user can view.

In this embodiment, the IPTV control functional entity 503 includes:
A sending module, configured to insert the comment list information of all users that the second end user has permission to view in a response message returned by a content playing functional entity to the second terminal, and forward the response message returned by the content playing entity to the second terminal.

In this embodiment, the second terminal includes: a first playing module, configured to, when the comment content is an audio/video media stream, after the comment list information of all users that the second end user has permission to view is sent to the second terminal, establish a real-time streaming session with the content playing functional entity; initiate a request message of playing the comment content to the content playing functional entity; and receive the comment content played to the second terminal by the content playing functional entity.

Furthermore, the second terminal includes: a second playing module, configured to, when the comment content is text information, after the IPTV control functional entity sends to the second terminal the comment list information of all users that the second end user has permission to view, send to a content comments functional entity a comment content download request message, where the message carries a download address of the comment content; receive a response message returned by the content comments functional entity according to the download address of the comment content, where the response message carries all comment content requested by the second terminal; and trigger to play a part or all of all the comment contents according to time points of the comment content in the IPTV program.

Referring to FIG. 12, this embodiment provides an apparatus for acquiring comment information when watching a program, in which an end user watches an IPTV program online, which includes: an acquisition module 601 and a sending module 602.

The acquisition module 601 is configured to acquire comment content sent by the end user on the IPTV program and related information corresponding to the comment content; where the related information corresponding to the comment content includes: a start position and an end position of the comment content in the IPTV program, a duration of the comment content and/or one unique identifier corresponding to the comment content.

The sending module 602 is configured to send the related information corresponding to the comment content to a metadata control functional entity, so as to enable an end user who demands and watches the IPTV program to select and play the comment content corresponding to the IPTV program.

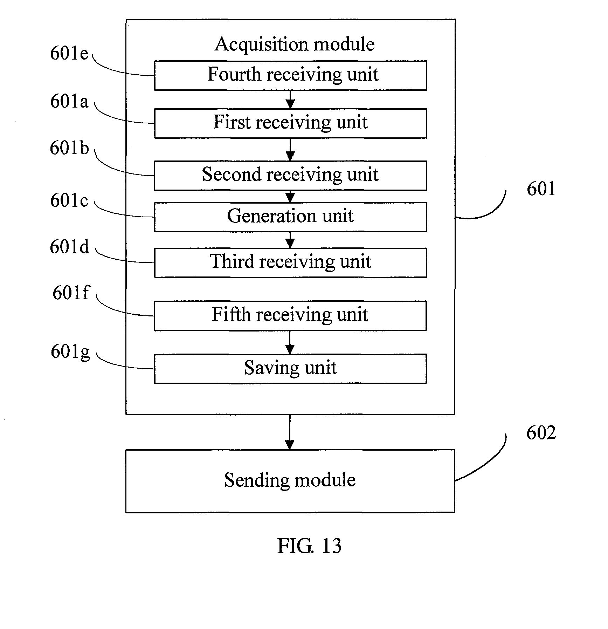

Referring to FIG. 13, furthermore, in this embodiment, the acquisition module 601 includes:
A first receiving unit 601a, configured to receive a recording start message sent by the end user, where the message carries a current playing position of the IPTV program upon the recording start message, and use the current playing position of the IPTV program as the start position.

A second receiving unit 601b, configured to receive and save an audio/video media stream sent by the end user through a media channel, where the audio/video media stream is the comment content of the end user on the IPTV program.

A generation unit 601c, configured to generate a corresponding unique identifier and a duration of the comment content for the comment content.

A third receiving unit 601d, configured to receive a recording stop message sent by the end user, where the message carries a current playing position of the IPTV program upon the recording stop message, and use the current playing position of the IPTV program as the end position.

Referring to FIG. 13, the acquisition module 701 further includes:
A fourth receiving unit 601e, configured to, before the receiving a recording start message sent by the end user, receive a request to establish a media channel initiated by the end user, and establish the media channel with the terminal.

Referring to FIG. 13, in this embodiment, the acquisition module 601 includes:
A fifth receiving unit 601f, configured to receive a comment message sent by the end user, where the message carries the comment content published by the end user on the IPTV, a start position and an end position of the comment content in the IPTV program, and a duration of the comment content.

A saving unit 601g, configured to save the received comment content and generate a unique identifier for the comment content.

The first receiving unit 601a, the second receiving unit 602b, the generation unit 601c, the third receiving unit 601d, and the fourth receiving unit 601e correspondingly implement the method for directly synchronizing comment content to a network side when watching a program in Embodiment 2. The fifth receiving unit 601f and the saving unit 601g correspondingly implement the method for locally recording comment content and then uploading the comment content to the network side when watching a program in Embodiment 3.

In the technical solutions provided in the embodiments of the present invention, in the process of watching a program, a user can synchronously record audio or video content as comment content on the program, so that later other friends can synchronously watch/listen to the corresponding comment content when watching the program, thereby solving the problem that comment information cannot be uploaded in a conventional IPTV system and introducing a new service form in an IPTV system.

The system and apparatus provided in the embodiments can specifically share the same concept as the method embodiments, and see the method embodiments for the specific implementation process thereof, which are no longer elaborated here.

All or a part of the foregoing technical solutions provided in the embodiments of the present invention may be implemented by a program instructing related hardware. The program may be stored in a readable storage medium, and the storage medium may include any medium that is capable of storing program codes, such as a ROM, a RAM, a magnetic disk, or an optical disc.

The foregoing descriptions are merely exemplary embodiments of the present invention, but are not intended to limit the present invention. Any modifications, equivalent replacements, or improvements made within the spirit and principle of the present invention shall fall within the protection scope of the present invention.

## Claims

1. A method for acquiring comment information when watching a program, wherein an end user watches an IPTV program online, and the method comprises:
acquiring, by a comments functional entity, comment content sent by the end user on the IPTV program and related information corresponding to the comment content; wherein the related information corresponding to the comment content comprises: a start position and an end position of the comment content in the IPTV program, a duration of the comment content and/or one unique identifier corresponding to the comment content; and
sending, by the comments functional entity, the related information corresponding to the comment content to a metadata control functional entity, so as to enable an end user who demands and watches the IPTV program to select and play the comment content corresponding to the IPTV program.

2. The method according to claim 1, wherein the acquiring, by a comments functional entity, comment content sent by the end user on the IPTV program and related information corresponding to the comment content comprises:
receiving, by the comments functional entity, a recording start message sent by the end user, wherein the message carries a current playing position of the IPTV program upon the recording start message, and using the current playing position of the IPTV program as the start position;
receiving and saving an audio/video media stream sent by the end user through a media channel, wherein the audio/video media stream is the comment content published by the end user on the IPTV program;
generating the corresponding unique identifier and the duration of the comment content for the comment content; and
receiving a recording stop message sent by the end user, wherein the message carries a current playing position of the IPTV program upon the recording stop message, and using the current playing position of the IPTV program as the end position.

3. The method according to claim 2, wherein before the receiving a recording start message sent by the end user, the method further comprises:
receiving a request to establish a media channel initiated by the end user, and establishing the media channel with a terminal.

4. The method according to claim 1, wherein the acquiring, by a comments functional entity, comment content sent by the end user on the IPTV program and related information corresponding to the comment content comprises:
receiving a comment message sent by the end user, wherein the message carries the comment content of the end user on the IPTV program, the start position and the end position of the comment content in the IPTV program, and the duration of the comment content; and
saving the received comment content, and generating one unique identifier for the comment content.

5. The method according to claim 1, wherein before the acquiring, by a comments functional entity, comment content sent by the end user on the IPTV program and related information corresponding to the comment content, the method further comprises:
sending, by an IPTV control functional entity, a request message for querying the related information about the IPTV program to the metadata control functional entity;
receiving a response message returned by the metadata control functional entity, wherein the response messages comprises: an identifier indicates allowing recording the comment content, and either of a uniform resource identifier of the comments functional entity and a public service identity of the content comment; and
forwarding the response message to a terminal, so as to enable the terminal to obtain the related information about the IPTV program.

6. The method according to claim 1, wherein after the sending the related information corresponding to the comment content to a metadata control functional entity, so as to enable a terminal that demands and watches the IPTV program to select and play the comment content corresponding to the IPTV program, the method further comprises:
sending, by a terminal, a request message to the metadata control functional entity, wherein the request message carries an identifier of the terminal, an identifier of the IPTV program, and a list of users who have permission to view the comment content.

7. The method according to claim 1, wherein the method further comprises:
receiving, by an IPTV control functional entity, a request to watch the IPTV program sent by a second end user;
acquiring comment list information of all users that the second end user has permission to view, wherein the comment list information comprises: the related information corresponding to the comment content that the second end user has permission to view; and
sending, to a second terminal, the comment list information of all users that the second end user has permission to view.

8. The method according to claim 7, wherein the acquiring comment list information of all users that the second end user is capable of viewing comprises:
sending a query request message to the metadata control functional entity, so as to enable the metadata control functional entity to query permission of the second end user to view comment content recorded by a user; and
receiving a response message returned by the metadata control functional entity, wherein the response message carries the comment list information of all users that the second end user has permission to view.

9. The method according to claim 7, wherein the sending, to a second terminal, the comment list information of all users that the second end user has permission to view comprises:
inserting the comment list information of all users that the second end user has permission to view in a response message returned by a content playing functional entity to the second terminal, and forwarding the response message to the second terminal.

10. The method according to claim 7, wherein when the comment content is an audio/video media stream, after the sending, to a second terminal, the comment list information of all users that the second end user has permission to view, the method further comprises:
establishing, by the second terminal, a real-time streaming session with a content playing functional entity;
initiating a request message of playing the comment content to the content playing functional entity; and
receiving the comment content played by the content playing functional entity to the second terminal.

11. The method according to claim 7, wherein when the comment content is text information, after the sending, to a second terminal, the comment list information of all users that the second end user has permission to view, the method further comprises:
sending, by the second terminal, a comment content download request message to the content comments functional entity, wherein the message carries a download address of the comment content;
receiving a response message returned by the content comments functional entity according to the download address of the comment content, wherein the response message carries all the comment content requested by the second terminal; and
triggering, by the second terminal, to play a part or all of all the comment content according to time points of the comment content in the IPTV program.

12. A system for acquiring comment information when watching a program, wherein an end user watches an IPTV program online, and the system comprises: a comments functional entity and a metadata control functional entity;
the comments functional entity is configured to acquire comment content sent by the end user on the IPTV program and related information corresponding to the comment content; wherein the related information corresponding to the comment content comprises: a start position and an end position of the comment content in the IPTV program, a duration of the comment content and/or one unique identifier corresponding to the comment content; and send the related information corresponding to the comment content to the metadata control functional entity; and
the metadata control functional entity is configured to receive the related information corresponding to the comment content sent by the comments functional entity, so as to enable an end user who demands and watches the IPTV program to select and play the comment content corresponding to the IPTV program.

13. The system according to claim 12, wherein the comments functional entity comprises:
a first acquisition module, configured to receive a recording start message sent by the end user, wherein the message carries a current playing position of the IPTV program upon the recording start message, and use the current playing position of the IPTV program as the start position; receive and save an audio/video media stream sent by the end user through a media channel, wherein the audio/video media stream is the comment content published by the end user on the IPTV program; generate the corresponding unique identifier and the duration of the comment content for the comment content; and receive a recording stop message sent by the end user, wherein the message carries a current playing position of the IPTV program upon the recording stop message, and use the current playing position of the IPTV program as the end position.

14. The system according to claim 13, wherein the first acquisition module is further configured to, before the receiving a recording start message sent by the end user, receive a request to establish the media channel initiated by the end user, and establish the media channel with a terminal.

15. The system according to claim 12, wherein the comments functional entity comprises:
a second acquisition module, configured to receive a comment message sent by the end user, wherein the message carries the comment content published by the end user on the IPTV program, the start position and the end position of the comment content in the IPTV program, and the duration of the comment content; and save the received comment content, and generate one unique identifier for the comment content.

16. The system according to claim 12, wherein the system further comprises an IPTV control functional entity, and
the IPTV control functional entity is configured to, before the acquiring, by a comments functional entity, comment content sent by the end user on the IPTV program and related information corresponding to the comment content, send to the metadata control functional entity a request message for querying the related information about the IPTV program; receive a response message returned by the metadata control functional entity, wherein the response message comprises: an identifier indicates allowing recording the comment content, and either of a uniform resource identifier of the comments functional entity and a public service identity of content comment; and forward the response message to the terminal, so as to enable the terminal to obtain the related information about the IPTV program.

17. The system according to claim 12, wherein the system further comprises a terminal,
the terminal is configured to, after the comments functional entity sends the related information corresponding to the comment content to the metadata control functional entity, so as to enable a terminal that demands and watches the IPTV program to select and play the comment content corresponding to the IPTV program, send a request message to the metadata control functional entity, wherein the request message carries an identifier of the terminal, an identifier of the IPTV program, and a list of users that have permission to view the comment information.

18. The system according to claim 12, wherein the system further comprises a second terminal, the IPTV control functional entity is further configured to receive a request to watch the IPTV program sent by a second end user; acquire comment list information of all users that the second end user has permission to view, wherein the comment list information comprises: related information corresponding to the comment content that the second end user has permission to view; and send, to the second terminal, the comment list information of all users that the second end user has permission to view.

19. The system according to claim 18, wherein the IPTV control functional entity comprises:
a query module, configured to send a query request message to the metadata control functional entity, so as to enable the metadata control functional entity to query permission of the second end user to view comment content recorded by a user; receive a response message returned by the metadata control functional entity, wherein the response message carries the comment list information of all users that the second end user has permission to view.

20. The system according to claim 18, wherein the IPTV control functional entity comprises:
a sending module, configured to insert the comment list information of all users that the second end user is able to view in a response message returned by a content playing functional entity to the second terminal, and forward a response message returned by the comments functional entity to the second terminal.

21. The system according to claim 18, wherein the second terminal comprises:
a first playing module, configured to, when the comment content is an audio/video media stream, after the sending, by the IPTV control functional entity, to the second terminal the comment list information of all users that the second end user is able to view, establish a real-time streaming session with a content playing functional entity; and initiate a request message of playing the comment content to the content playing functional entity; and receive the comment content played by the content playing functional entity to the second terminal.

22. The system according to claim 18, wherein the second terminal comprises:
a second playing module, configured to, when the comment content is text information, after the IPTV control functional entity sends to the second terminal the comment list information of all users that the second end user is able to view, send to a content comments functional entity a comment content download request message, wherein the message carries a download address of the comment content; receive a response message returned by the content comments functional entity according to the download address of the comment content, wherein the response message carries all the comment content requested by the second terminal; and trigger to play a part or all of all the comment content according to time points of the comment content in the IPTV program.

23. An apparatus for acquiring comment information when watching a program, wherein an end user watches an IPTV program online, and the apparatus comprises:
an acquisition module, configured to acquire comment content sent by the end user on the IPTV program and related information corresponding to the comment content; wherein the related information corresponding to the comment content comprises: a start position and an end position of the comment content in the IPTV program, a duration of the comment content and/or one unique identifier corresponding to the comment content; and
a sending module, configured to send the related information corresponding to the comment content to a metadata control functional entity, so as to enable an end user who demands and watches the IPTV program to select and play the comment content corresponding to the IPTV program.

24. The apparatus according to claim 23, wherein the acquisition module comprises:
a first receiving unit, configured to receive a recording start message sent by the end user, wherein the message carries a current playing position of the IPTV program upon the recording start message, and use the current playing position of the IPTV program as the start position;
a second receiving unit, configured to receive and save an audio/video media stream sent by the end user through a media channel, wherein the audio/video media stream is the comment content published by the end user on the IPTV program;
a generation unit, configured to generate the corresponding unique identifier and the duration of the comment content for the comment content; and
a third receiving unit, configured to receive a recording stop message sent by the terminal, wherein the message carries a current playing position of the IPTV program upon the recording stop message, and use the current playing position of the IPTV program as the end position.

25. The apparatus according to claim 24, wherein the acquisition module further comprises:
a fourth receiving unit, configured to, before the receiving the recording start message sent by the terminal, receive a request to establish a media channel initiated by the terminal, and establish the media channel with the terminal.

26. The apparatus according to claim 23, wherein the acquisition module comprises:
a fifth receiving unit, configured to receive a comment message sent by the end user, wherein the message carries the comment content published by the end user on the IPTV program, the start position and the end position of the comment content in the IPTV program, and the duration of the comment content;
a saving unit, configured to save the received comment content, and generate one unique identifier for the comment content.
